(19) Europäisches Patentamt

**European Patent Office**

**Office européen des brevets**

(11) Veröffentlichungsnummer: **0 039 070**
**B1**

(12) **EUROPÄISCHE PATENTSCHRIFT**

(45) Veröffentlichungstag der Patentschrift:
**21.11.84**

(21) Anmeldenummer: **81103138.4**

(22) Anmeldetag: **27.04.81**

(51) Int. Cl.³: **F 15 B  15/10,** F 16 J  3/06

(54) **Schubkolbeneinrichtung mit einer Membrandichtung.**

(30) Priorität: **29.04.80  CH 3311/80**

(43) Veröffentlichungstag der Anmeldung:
**04.11.81 Patentblatt 81/44**

(45) Bekanntmachung des Hinweises auf die Patenterteilung:
**21.11.84 Patentblatt 84/47**

(84) Benannte Vertragsstaaten:
**AT DE FR GB IT SE**

(56) Entgegenhaltungen:
**CH - A - 369 633**
**DE - A - 2 649 989**
**DE - B - 1 175 568**
**FR - A - 704 479**
**FR - A - 1 428 839**
**GB - A - 993 971**
**US - A - 2 649 843**

(73) Patentinhaber: **BUCHER-GUYER AG Maschinenfabrik,**
**CH-8166 Niederweningen/Zürich (CH)**

(72) Erfinder: **Kägi, Bruno, Juststrasse 56, CH-8706 Meilen**
**(CH)**

(74) Vertreter: **Patentanwälte Leinweber & Zimmermann,**
**Rosental 7/II Aufg., D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine Schubkolbeneinrichtung mit einer den Spalt zwischen dem Kolben und dem umgebenden Gehäuse überbrückenden Membrandichtung, wobei der Kolben und das Gehäuse gegensinnig geneigte Stützflächen für die Membran bilden, auf denen die Membran während der Bewegung des Kolbens relativ zu dem Gehäuse abrollt und diese Stützflächen gegenüber der Bewegungsrichtung des Kolbens geneigt verlaufen, so daß die Membran durch die Kolbenbewegung von der Form der Stützfläche am Gehäuse in die Form der Stützfläche des Kolbens umgestülpt wird.

Bei einer in der FR-A-704 479 beschriebenen Schubkolbeneinrichtung dieser Art haben das Gehäuse und der Kolben kegelförmige Stützflächen mit entgegengesetzt gleichem Kegelwinkel. Die Membran ist gleichfalls kegelförmig, wobei ihr Kegelwinkel im undeformierten Zustand demjenigen des Gehäuses entspricht. Im Vergleich zum Kolbenhub ist die Kolbenhöhe und folglich auch die gesamte Bauhöhe dieser bekannten Einrichtung verhältnismäßig groß.

In der DE-B-1 175 568 ist eine Vorrichtung zum Abgeben von Flüssigkeiten beschrieben, die eine im undeformierten Zustand kugelförmige Membran aufweist. Diese Membran stützt sich an einer im wesentlichen an ihre Form angepaßten hohlkugelförmigen Gehäusewand ab. Da der Kolben keine kugelförmige Stützfläche aufweist, deren Krümmung derjenigen der Membran entspricht, kann diese jedoch nicht durch die Kolbenbewegung von der Form der Stützfläche am Gehäuse in die Form der Stützfläche des Kolbens umgestülpt werden.

Der Erfindung liegt die Aufgabe zugrunde, die gattungsgemäße Schubkolbeneinrichtung dahingehend weiterzubilden, daß sich bei gleichem Kolbenhub und gleicher Neigung der Gehäusestützfläche eine Verringerung der Höhe des Kolbens erzielen läßt.

Erfindungsgemäß wird diese Aufgabe dadurch gelöst, daß das Gehäuse mit einer hohlkugelförmig gekrümmten Stützfläche und der Kolben mit einer kugelförmig gekrümmten Stützfläche mit annähernd gleichem Radius versehen sind und daß die Membran zumindest im Bereich ihres Rollkontaktes mit den Stützflächen in undeformierten Zustand eine kugelförmige Krümmung mit annähernd dem Radius der Stützflächen aufweist.

Durch diese Maßnahmen wird erreicht, daß die mittlere Neigung der Stützfläche des Kolbens wesentlich kleiner ist als diejenige des Gehäuses, so daß sich ein bestimmter Kolbenhub mit einem Kolben erzielen läßt, der eine im Vergleich zum Stand der Technik kleinere Höhe hat, weil die von der flachen Kolbenstützfläche abrollende Membran auf die steile Stützfläche des Gehäuses aufläuft und umgekehrt. Anders ausgedrückt, bei gleicher Länge der Mantellinien der Stützflächen von Gehäuse und Kolben ist die radiale Projektion der Stützfläche des Kolbens kleiner als diejenige des Gehäuses. Die erfindungsgemäße Schubkolbeneinrichtung ermöglicht daher eine kleinere Bauhöhe.

Zweckmäßige Weiterbildungen der Erfindung ergeben sich aus den Unteransprüchen.

Einige Ausführungsbeispiele der Erfindung sind in den Zeichnungen dargestellt und werden im folgenden näher erläutert. Es zeigt

Fig. 1 einen schematischen Längsschnitt durch einen Bereich einer Schubkolbeneinrichtung gemäß der Erfindung,

Fig. 2 eine Darstellung entsprechend Fig. 1 einer Schubkolbeneinrichtung nach dem Stand der Technik,

Fig. 3 einen schematischen Längsschnitt entsprechend Fig. 1 bei gleichem Radius der sphärischen Form, jedoch anderem Radius der Biegekrümmung der Membran im Rollspalt,

Fig. 4 eine Darstellung entsprechend Fig. 3 mit einer gegenüber den Beispielen nach Fig. 1 und 3 unterschiedlichen Neigung der Tangenten an die sphärische Stützfläche des Gehäuses gegenüber der Mittelachse,

Fig. 5 eine Schnittdarstellung entsprechend Fig. 1 bei gleichem Radius der sphärischen Form, jedoch größerem Radius der Biegeverformung der Membran im Rollspalt,

Fig. 6 einen Teilquerschnitt durch eine für das Ausführungsbeispiel nach Fig. 5 geeignete Membran,

Fig. 7 eine sektorförmig geschnittene perspektivische Teildarstellung eines Ausführungsbeispiels der Schubkolbeneinrichtung, und

Fig. 8 einen radialen Teilschnitt durch eine Schubkolbeneinrichtung mit schwenkbar geführter Kolbenstange.

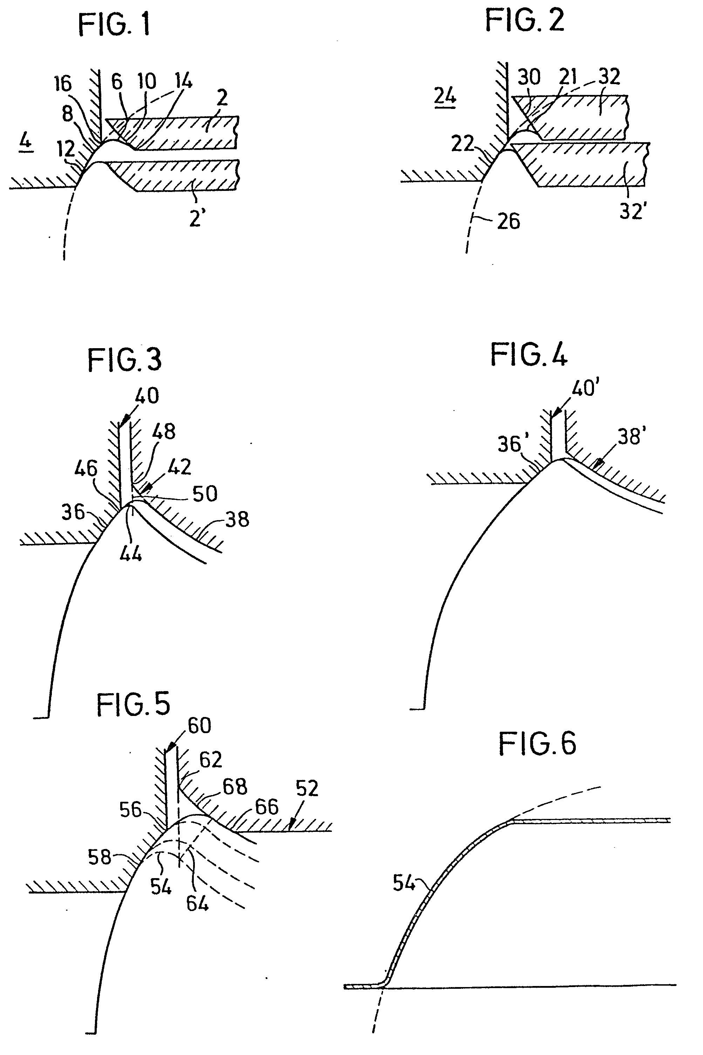

Die Schubkolbeneinrichtung hat im wesentlichen einen Schubkolben 2, ein diesen Kolben umschließendes Gehäuse 4 und eine Dichtmembran 6, die den ringförmigen Rollspalt 8 zwischen dem Kolben 2 und dem Gehäuse 4 überbrückt und einerseits mit dem Kolben und andererseits mit dem Gehäuse fest verbunden ist. Während der Schubbewegung des Kolbens z. B. zwischen den beiden in Fig. 1 dargestellten Positionen 2 und 2' des Kolbens rollt die Membran 6 an den Stützflächen 10, 12 des Kolbens bzw. des Gehäuses ab. Dabei ändert sich die Form der Membran, wie durch ihre verschiedenen Krümmungslinien in Fig. 1 angedeutet ist, ohne daß dabei in der Membran im wesentlichen andere Deformationen als durch die Biegung innerhalb des Rollspaltes 8 auftreten.

Das Gehäuse mit seiner sphärisch (hohlkugelförmig) gekrümmten Stützfläche 12 und der Kolben mit seiner mit mindestens angenähert gleichem Radius sphärisch (kugelförmig) gekrümmten Stützfläche 10 sind so ausgeführt, daß die Membran im Rollspalt keinen größeren Biegedeformationen ausgesetzt ist, als sich aufgrund der Eigenschaften des Membranmaterials, d. h. seiner Festigkeitseigenschaften und der Dicke der Membran, ergibt. Der für ein bestimmtes Membranmaterial ohne besondere Beanspruchungen erzielbare minimale Biegeradius läßt sich leicht durch einen Faltversuch des Membranmaterials feststellen. Falls durch die Dimensionierung des Kolbens relativ zum Gehäuse der Schubkolbeneinrichtung ein kleinerer Biegeradius der Membran im Rollspalt 8 erzwungen wird, so ist mit einem baldigen Bruch der Membran zu rechnen.

Die Membran hat im undeformierten Zustand, d. h. vor dem Einbau in die Schubkolbeneinrichtung, eine Kugelform mit der Krümmung entsprechend der Stützfläche 12 des Gehäuses 4, und durch die Einwirkung des Kolbens 2 stülpt sich diese Kugelform nach innen um, so daß der umgestülpte Teil den gleichen Kugelradius hat wie vor der Umstülpung, d. h. die Kugelkrümmung des äußeren Membranteiles findet ihre Fortsetzung in der Umstülpform im inneren Teil der Membran. Dies ergibt sich durch die Gestaltung der Stützfläche 10 des Kolbens 2 entsprechend der Umstülpform in der entsprechend der Darstellung in Fig. 1 untersten Kolbenposition 2'. An der Stelle 14, an der die Membran 6 ihre erste Berührungsstelle an der Stützfläche 10 des Kolbens 2 findet, befindet sich der Krümmungswendepunkt von der Krümmung entsprechend dem Biegeradius der Membran zu der Krümmung entsprechend der Kugelform der Stützfläche 10 des Kolbens.

Ein Vergleich mit dem in Fig. 2 dargestellten Ausführungsbeispiel entsprechend dem Stand der Technik macht Vorteile der erfindungsgemäßen Schubkolbeneinrichtung besonders deutlich. An der obersten möglichen Anlagestelle der Membran 21 an der kegelstumpfförmigen Stützfläche 22 hat das Gehäuse 24 dieser bekannten Schubkolbeneinrichtung den gleichen Durchmesser wie an der entsprechenden Stelle 16 der erfindungsgemäßen Schubkolbeneinrichtung nach Fig. 1. Außerdem entspricht der Kegelwinkel der Stützfläche 22 der mittleren Neigung der Stützfläche 12. In Fig. 2 ist die Kugelkrümmung entsprechend dem Ausführungsbeispiel nach Fig. 1 durch die Strichlinie 26 angedeutet. Die Stützfläche 30 des Kolbens 32 entspricht der Umkehrform eines Kegels mit der Stützfläche 22 des Gehäuses 24, so daß die Stützfläche 30 in entgegengesetzter Richtung die gleiche Neigung hat wie die Stützfläche 22. Schließlich sind in Fig. 2 die obere (32) und untere (32') Kolbenposition mit gleichem Abstand bzw. gleicher Hubweite dargestellt wie im erfindungsgemäßen Ausführungsbeispiel nach Fig. 1.

Der Vergleich zwischen den Darstellungen der Fig. 1 und 2 für diese vergleichbar gestalteten Ausführungsbeispiele entsprechend der vorliegenden Erfindung und entsprechend dem Stand der Technik zeigt, daß eine erfindungsgemäße Schubkolbeneinrichtung ein wesentlich geringeres Bauvolumen hat. Die erforderliche Mindesthöhe einer Schubkolbeneinrichtung entsprechend dem Stand der Technik ist größer als bei einer Schubkolbeneinrichtung entsprechend der Erfindung, da das bekannte Konstruktionsprinzip eine steilere Stützfläche 30 des Kolbens 32 benötigt, um die gleiche Hubbewegung auszuführen. Weiterhin ergibt sich, daß aufgrund der vorliegenden Erfindung die Durchmesseränderung des Rollspaltes 8 geringer ist als die Durchmesseränderung im Rollspalt 28, da sich die Neigung der Stützfläche 12 aufgrund ihrer Kugelform von der oberen Hubposition zur unteren Hubposition zunehmend verringert. Da im Gegensatz zu der mittleren Neigung der Stützfläche 12 des Gehäuses die Neigung der Stützfläche 10 des Kolbens beim Ausführungsbeispiel gemäß der Erfindung wesentlich geringer ist, ergibt sich schließlich auch beim erfindungsgemäßen Ausführungsbeispiel ein größerer Winkel zwischen den Tangenten an beiden Stützflächen 10, 12 als zwischen den konischen Stützflächen 22, 30. Letzteres hat den Vorteil der Biegung der Membran um einen kleineren Winkel. Es zeigt sich somit, daß bei gleichem Hubvolumen eine Einrichtung gemäß der vorliegenden Erfindung nicht nur eine wesentlich geringere Baugröße aufweist, sondern sich auch eine wesentlich geringere Beanspruchung der Membran durch den Druck des abzusperrenden Mediums ergibt, so daß eine erfindungsgemäße Einrichtung eine wesentlich größere Lebensdauer aufweist, wie sich auch durch Dauerversuche an mehreren erfindungsgemäßen Einrichtungen bestätigt hat.

Die schematischen Darstellungen nach Fig. 3 und 4 von Ausführungsbeispielen gemäß der vorliegenden Erfindung mit gleichen Radius der Krümmung der Stützflächen 36, 38 bzw. 36', 38' am Gehäuse 40 und Kolben 42 und bei gleichem Biegeradius der Membran 44 im Rollspalt zeigt die Abhängigkeit der möglichen Hubweite des Kolbens 42 von der mittleren Neigung der Stützfläche 36 gegenüber der Kolbenachse. Die beiden extremen Hubpositionen des Kolbens sind von der Position der oberen Grenzkante 46 der Stützfläche 36 des Gehäuses und der oberen Grenzkante 48 der Stützfläche 38 des Kolbens 42 abhängig. Die Grenzkante 48 der Stützfläche 38 bewegt sich entlang der Strichlinie 50 nach unten, und bei Kontakt mit der Membran 44 ist die unterste Hubposition erreicht.

Die Darstellung der Fig. 4 zeigt die noch wesentlich kleinere mögliche Hubweite aufgrund der noch flacheren Neigung der Stützfläche 36' des Gehäuses 40'.

Das Ausführungsbeispiel nach Fig. 5 zeigt die Abhängigkeit der zulässigen Hubweite des Kolbens 52 von dem Biegeradius der Membran 54 durch einen Vergleich mit dem Ausführungsbeispiel nach Fig. 3, bei dem die obere Grenzkante 46 der Stützfläche des Gehäuses die gleiche Position hat wie die obere Grenzkante 56 der Stützfläche 58 des Gehäuses 60 entsprechend dem Ausführungsbeispiel nach Fig. 5. Durch den größeren Biegeradius der Membran 54, der sich beispielsweise aufgrund der Verwendung einer dickeren und damit weniger biegsamen Membran ergibt, ist eine wesentlich größere Hublänge des Kolbens 52 möglich, bis die Kante 62 kurz vor der Berührung mit der Membran 54 steht. Die Strichlinie 64 zeigt den Verlauf der ersten Kontaktstelle 66 der Membran mit der Stützfläche 68 des Kolbens 52 bei der Abwärtsbewegung des Kolbens, und es zeigt sich, daß die Strichlinie 64 angenähert die gleiche Krümmung aufweist wie die Stützfläche des Gehäuses.

Die Fig. 6 zeigt die Membran 54 des Ausführungsbeispiels nach Fig. 5 im undeformierten Zustand, d. h. vor ihrem Einbau in eine erfindungsgemäße Schubkolbeneinrichtung. Die Herstellung erfolgt z. B. durch Einspannen eine ebenen Folie an ihrem Umfang und Tiefziehen mittels eines Stempels, der im wesentlichen die Form entsprechend der Membran aufweist. Die Verformung einer ebenen Membran in Kugelform ist mit einer wesentlich geringeren Verformungsbeanspruchung des Materials verbunden, das z. B. aus einem kunststoff- oder gummiimprägnierten Gewebe besteht.

Durch die Vorformung der Membran entsprechend der nach oben verlängerten Form der Stützfläche 58 des Gehäuses 60 ergibt sich in der Membran nach dem Einbau in die Schubkolbeneinrichtung nur die Biegedeformation im Bereich des Rollspaltes, d.h. im Übergangsbereich von der konkaven Form der Stützfläche am Gehäuse in die konvexe Form der Stützfläche am Kolben. In der erfindungsgemäßen Schubkolbeneinrichtung treten somit in der Membran nur form- und materialgerechte Deformationen auf, so daß sie eine hohe Lebensdauer hat. Wie bereits erwähnt, ergeben sich außerdem aufgrund der geometrischen Form der Stützflächen am Gehäuse und am Kolben geringere Kräfte an der Membran aufgrund des Druckes des abzusperrenden Mediums.

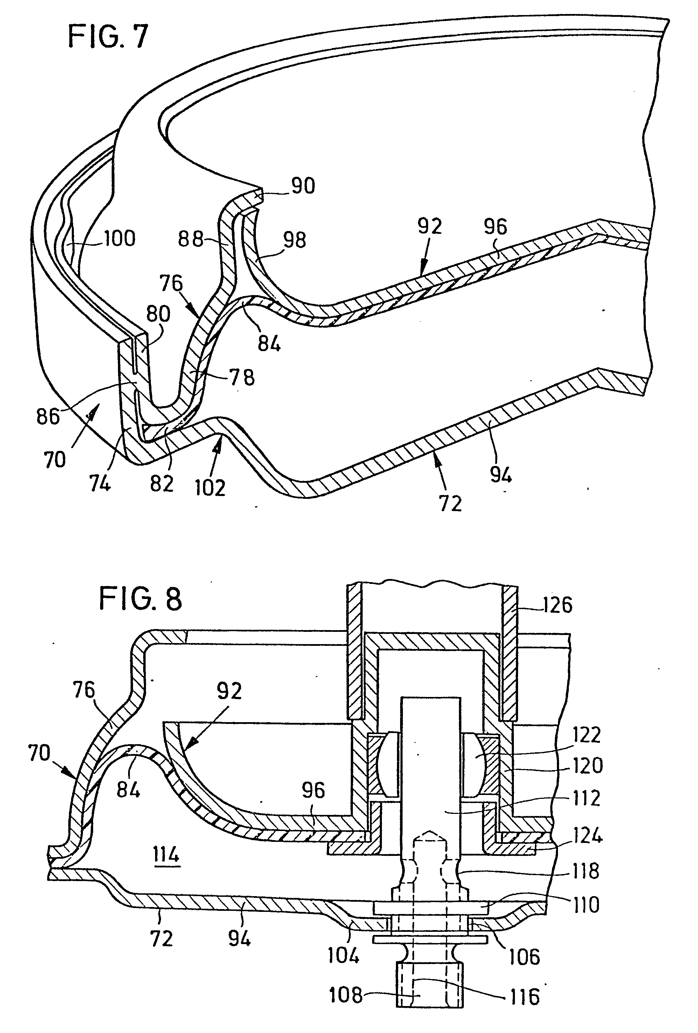

Die bei gleichem Hubvolumen bzw. gleicher Hubweite wesentlich flachere Form einer erfindungsgemäßen Schubkolbeneinrichtung sowie die sphärische Krümmung der Stützflächen am Gehäuse und Kolben ermöglicht weiterhin eine einfachere und damit kostengünstigere Herstellung des Gehäuses und des Kolbens durch Tiefziehen, wie am besten durch die Darstellung in Fig. 7 deutlich wird. Das Gehäuse 70 nach Fig. 7 ist zweiteilig und hat einen Bodenteil 72 mit einem aufgebogenen Rand 74 sowie einen Umfangteil 76, die beide aus Blech tiefgezogen sind. An den sphärisch gekrümmten Stützflächenteil 78 des Gehäuseumfangsteiles schließt sich über eine Krümmung ein parallel zu dem Rand 74 aufgebogener Flansch 80 auf, der nach Einklemmen des äußeren Umfangsbereiches 82 der Membran 84 in axialer Richtung, d. h. in Richtung der Kolbenbewegung, zwischen beiden Gehäuseteilen 72 und 76 durch Punktschweißungen 86 mit dem aufgebogenen Rand 74 des Gehäusebodenteiles 72 verbunden ist. An den Stützflächenteil 78 schließt sich nach oben ein zylindrischer Bereich 88 des Gehäuses an, dessen oberes Ende radial nach innen zur Bildung eines Anschlages 90 für den Kolben 92 umgebogen ist.

Der Kolben 92 hat einen ebenen, zur Bodenwand 94 des Bodenteils 72 parallelen Bodenteil 96, der nach außen in einen bogenförmig nach oben gebogenen Kolbenumfangsteil 98 übergeht, so daß er eine teller- bzw. napfförmige Gestalt hat und ebenfalls besonders leicht durch Tiefziehen herstellbar ist. Der großflächige Bodenteil 96 des Kolbens bietet zahlreiche Möglichkeiten der Befestigung einer Kolbenstangeneinrichtung am Kolben, die zur Vereinfachung der Darstellung nicht abgebildet sind.

Für die Befestigung der Schubkolbeneinrichtung an einem Halterungsteil in Abhängigkeit von der Anwendung der Schubkolbeneinrichtung ist der Flansch 80 des Gehäuseumfangteiles 76 an mehreren Stellen mit nockenartigen Einbuchtungen 100 begrenzter axialer Länge versehen, die durch nicht dargestellte Teile einer Halterungseinrichtung nach Art eines Bajonettverschlusses untergriffen werden können.

Die Aufbiegung des Gehäuserandes in axialer Richtung trägt ebenfalls dazu bei, die Abmessungen der Schubkolbeneinrichtung gering zu halten, und der sich ergebende Flanschbereich gestattet eine gute Befestigung bei der Anwendung der Schubkolbeneinrichtung. Weiterhin gestattet ein ringförmig umlaufender Absatz 102 im Gehäusebodenteil 72 das zentrierende Einsetzen der Schubkolbeneinrichtung in einer kreisrunden Öffnung einer nicht dargestellten Halterung eines Gerätes, an dem die Einrichtung angewandt wird.

Die Fig. 8 zeigt im radialen Teilschnitt ein Ausführungsbeispiel der Schubkolbeneinrichtung mit einer eine Schwenkbewegung zulassenden Kolbenführung. Wie bereits erwähnt, entspricht es einem wesentlichen Vorteil der erfindungsgemäßen Schubkolbeneinrichtung, daß der Kolben Kippbewegungen ausführen kann, ohne daß die Membran unzulässigen Beanspruchungen ausgesetzt wird. Der Gehäusebodenteil 72, der Gehäuseumfangsteil 76 und der Kolben 92 sind im wesentlichen entsprechend dem Ausführungsbeispiel nach Fig. 7 gestaltet. In der Mitte der Bodenwand 94 ist eine Vertiefung 104 eingepreßt, in der sich die Aufnahmeöffnung 106 für einen Anschlußstutzen 108 befindet, der mittels einer Schraubenmutter 110 bei Verwendung von nicht dargestelltem Dichtungsmaterial dicht an der Öffnung 106 gehalten ist. Zum inneren Teil der Einrichtung hin verlängert sich der Anschlußstutzen 108 zu einem Führungsschaft 112 für die Zentrierung der Schiebebewegung des Kolbens 92 innerhalb des Gehäuses 70. Für die Ein- und Ausströmung des Druckmediums in den durch die Membran 84 abgedichteten Raum 114 ist der Schaft 112 mit einer axialen Bohrung 116 versehen, an die sich in den Raum 114 mündende Radialbohrungen 118 anschließen.

Der Kolben 92 hat einen nach oben gerichteten, abgesetzten hohlzylindrischen Ansatz 120 für die Aufnahme des Führungsschaftes 112 und eines auf dem Führungsschaft verschiebbaren Gelenklagers 122. Das Gelenklager 122 erlaubt eine Kippbewegung des Kolbens 92, ohne daß sich der Kolben aus seiner um den Führungsschaft 112 zentrierten Position verschiebt. Die Führung des Kolbens 92 kann jedoch auch durch eine außerhalb der erfindungsgemäßen Einrichtung vorgesehene Vorrichtung erfolgen, die sich an dem Gerät befindet, an dem die erfindungsgemäße Einrichtung angewandt wird.

Für die Halterung der Membran 84 an dem Kolben ist in die Öffnung des Ansatzes 120 ein Flanschring 124 eingepreßt, der die Membran zwischen seinem Flansch und dem Kolbenboden 96 festhält. Das äußere Ende des hohlzylindrischen Kolbenansatzes 120 dient der Befestigung einer Kolbenstange 126 für die Übertragung der Bewegung des Kolbens auf ein nicht dargestelltes Gerät oder für die Einleitung einer Bewegung auf den Kolben.

Es versteht sich, daß durch die Kippbarkeit des Kolbens sich für die erfindungsgemäße Schubkolbeneinrichtung neuartige Anwendungsmöglichkeiten ergeben. Beispielsweise kann das Gelenklager 122 bei der Anwendung an einer Kurbelmechanik die Aufgabe eines Pleuellagers erfüllen. Die Kippbarkeit des Kolbens ist auch vorteilhaft für die Einleitung von Kippbewegungen an einer Verstelleinrichtung.

**Patentansprüche**

1. Schubkolbeneinrichtung mit einer den Spalt zwischen dem Kolben (2, 92) und dem umgebenden Gehäuse (4, 70) überbrückenden Membrandichtung (6, 84), wobei der Kolben und das Gehäuse gegensinnig geneigte Stützflächen (10, 12; 98, 78) für die Membran (6, 84) bilden, auf denen die Membran während der Bewegung des Kolbens relativ zu dem Gehäuse abrollt und diese Stützflächen gegenüber der Bewegungsrichtung des Kolbens geneigt verlaufen, so daß die Membran durch die Kolbenbewegung von der Form der Stützfläche (12, 78) am Gehäuse in die Form der Stützfläche (10, 98) des Kolbens umgestülpt wird, dadurch gekennzeichnet, daß das Gehäuse (4, 70) mit einer hohlkugelförmig gekrümmten Stützfläche (12, 78) und der Kolben (2, 92) mit einer kugelförmig gekrümmten Stützfläche (10, 98) mit annähernd gleichem Radius versehen sind und daß die Membran (6, 84) zumindest im Bereich ihres Rollkontaktes mit den Stützflächen (12, 10, 78, 98) im undeformierten Zustand eine kugelförmige Krümmung mit annähernd dem Radius der Stützflächen aufweist.

2. Schubkolbeneinrichtung nach Anspruch 1, dadurch gekennzeichnet, daß die Membran (6, 54) aus einem ursprünglich ebenen Material aus gummi- oder kunststoffimprägniertem Gewebe kugelförmig tiefgezogen ist.

3. Schubkolbeneinrichtung nach Anspruch 1, dadurch gekennzeichnet, daß die Tangentialebenen an der Stützfläche (12) des Gehäuses (4) mit der Mittelachse der Einrichtung einen Winkel von weniger als 30° einschließen.

4. Schubkolbeneinrichtung nach Anspruch 3, dadurch gekennzeichnet, daß der kleinste Winkel zwischen einer Tangentialebene an der Stützfläche (12) des Gehäuses (4) gegenüber der Mittelachse der Einrichtung im Bereich zwischen 0—20° liegt.

5. Schubkolbeneinrichtung nach einem der Ansprüche 1 bis 4, dadurch gekennzeichnet, daß das Gehäuse (70) der Einrichtung aus einem tellerförmigen Gehäusebodenteil (72) mit einem aufwärts gebogenen Flanschrand (74) und einem die Membranstützfläche (78) aufweisenden ringförmigen Gehäuseumfangsteil (76) mit einem aufwärts gebogenen Flanschrand (80) besteht, daß der Gehäuseumfangsteil (76) in den Gehäusebodenteil (72) deckelartig eingesetzt ist, wobei die beiden Gehäuseteile (72, 76) die Membran (84) an ihrem äußeren Umfangsbereich (82) klemmend zwischen sich einschließen und die zur Mittelachse der Einrichtung koaxialen Flanschränder (80, 74) fest miteinander verbunden sind.

6. Schubkolbeneinrichtung nach Anspruch 5, dadurch gekennzeichnet, daß die Gehäuseteile (72, 76) und der Kolben (92) tiefgezogene Blechteile sind.

7. Schubkolbeneinrichtung nach Anspruch 5 oder 6, dadurch gekennzeichnet, daß der Gehäusebodenteil (72) und der Gehäuseumfangsteil (76) je einen Wandteil aufweisen, die parallel zueinander und in einer quer zur Mittelachse der Einrichtung verlaufenden Ebene angeordnet sind und den äußeren Umfangsbereich (82) der Membran (84) zwischen sich einklemmen, wobei die zur Mittelachse der Einrichtung koaxialen Flanschränder (80, 74) beider Gehäuseteile sich unmittelbar an diese klemmenden Wandteile anschließen.

8. Schubkolbeneinrichtung nach einem der Ansprüche 5 bis 7, dadurch gekennzeichnet, daß die Flanschränder (74, 80) der Gehäuseteile (72, 76) durch Punktschweißen miteinander verbunden sind.

9. Schubkolbeneinrichtung nach einem der Ansprüche 5 bis 8, dadurch gekennzeichnet, daß an dem Gehäusebodenteil (72) oder dem Gehäuseumfangsteil (76) Ansätze (100) für die Befestigung der Einrichtung in Anwendungsposition vorgesehen sind.

10. Schubkolbeneinrichtung nach Anspruch 9, dadurch gekennzeichnet, daß die Ansätze aus radial nach innen gerichteten Ausbuchtungen (100) eines Flanschrandes (80) des Gehäuseumfangsteiles (76) bestehen und eine Unterfassungsfläche aufweisen.

11. Schubkolbeneinrichtung nach Anspruch 5, dadurch gekennzeichnet, daß der Gehäuseumfangsteil (76) einen radial nach innen gerichteten Rand (90) aufweist, der einen Anschlag für den Kolben (92) bildet.

12. Schubkolbeneinrichtung nach Anspruch 1 oder 5, gekennzeichnet durch einen am Gehäuseboden (72) befestigten Führungsschaft (112) für den Kolben (92), wobei zwischen dem Führungsschaft und einem hohlzylindrischen Kolbenansatz (120) ein Gelenklager (122) vorgesehen ist.

## Claims

1. A thrust piston device having a membrane seal (6; 84) which bridges across the gap between the piston (2; 92) and the surrounding housing (4; 70), where the piston and the housing form for the membrane (6; 84) bearing surfaces (10, 12; 98; 78) which are inclined in opposite senses and on and off which the membrane rolls during the motion of the piston relative to the housing, and these bearing surfaces run inclined with respect to the direction of motion of the piston so that through the motion of the piston the membrane gets inverted from the shape of the bearing surface (12; 78) on the housing into the shape of the bearing surface (10; 98) on the piston, characterized in that the housing (4; 70) is provided with a bearing surface (12; 78) curved to the shape of a hollow sphere and the piston (2; 92) is provided with a bearing surface (10; 98) curved to the shape of a sphere of approximately the same radius and that the membrane (6; 84) at least in the region of its rolling contact with the bearing surface (12, 10; 78, 98) exhibits in the undeformed state a curvature to the shape of a sphere of approximately the radius of the bearing surfaces.

2. A thrust piston device as in claim 1, characterized in that the membrane (6; 54) is deep drawn to the shape of a sphere from an originally flat material of rubber- or plastics-impregnated fabric.

3. A thrust piston device as in claim 1, characterized in that the tangent planes to the bearing surface (12) on the housing (4) form an angle of less than 30° to the centreline of the device.

4. A thrust piston device as in claim 3, characterized in that the least angle between a tangent plane to the bearing surface (12) on the housing (4) with respect to the centreline of the device lies in the range between 0 — 20°.

5. A thrust piston device as in one of the claims 1 to 4, characterized in that the housing (70) of the device consists of a plateshaped housing base part (72) having a flange edge (74) curved upwards and an annular housing peripheral part (76) which exhibits the bearing surface (78) for the membrane and has a flange edge (80) curved upwards, that the housing peripheral part (76) is inserted like a lid into the housing base part (72), the two housing parts (72, 76) enclosing the membrane (84) in a clamp between them at their outer peripheral region (82) and the flange edges (80, 74) coaxial with the centreline of the device being connected firmly together.

6. A thrust piston device as in claim 5, characterized in that the housing parts (72, 76) and the piston (92) are deep-drawn sheetmetal parts.

7. A thrust piston device as in claim 5 or 6, characterized in that the housing base part (72) and the housing peripheral part (76) exhibit respective wall portions which are arranged in parallel with one another and in a plane running transversely to the centreline of the device and clamp between them the outer peripheral region (82) of the membrane (84), the flange edges (80, 74) of the two housing parts, coaxial with the centreline of the device, being connected directly to these clamping wallparts.

8. A thrust piston device as in one of the claims 5 to 7, characterized in that the flange edges (74, 80) of the housing parts (72, 76) are connected together by spotwelding.

9. A thrust piston device as in one of the claims 5 to 8, characterized in that projections (100) are provided on the housing base part (72) or the housing peripheral part (76) for fixing the device in the position of use.

10. A thrust piston device as in claim 9, characterized in that the projections consist of bulges (100) directed radially inwards from one flange edge (80) of the housing peripheral part (76) and exhibit each a catch face underneath.

11. A thrust piston device as in claim 5, characterized in that the housing peripheral part (76) exhibits an edge (90) directed radially inwards, which forms a stop for the piston (92).

12. A thrust piston device as in claim 1 or 5, characterized by a guide shaft (112) fixed to the housing base (72) for the piston (92), a ball-and-socket joint (122) being provided between the guide shaft and a hollow cylindrical extension (120) from the piston.

## Revendications

1. Dispositif à piston poussant muni d'une membrane d'étanchéité (6, 84) franchissant l'espacement entre le piston (2, 92) et le corps (4, 70), le piston et le corps formant pour la membrane (6, 84) des surfaces d'appui (10, 12, 98, 78) inclinées en sens opposé, sur lesquelles la membrane se déroule pendant le mouvement du piston relativement au corps et ces surfaces d'appui ayant une allure inclinée relativement à la direction de mouvement du piston, de sorte que par le mouvement du piston, la membrane se renverse, de la forme de la surface d'appui (12, 78) du corps à la forme de la surface d'appui (10, 98) du piston, caractérisé en ce que le corps (4, 70) est muni d'une surface d'appui (12, 78) courbée en forme de sphère creuse et le piston (2, 92) d'une surface d'appui (10, 98) courbée en forme de sphère, ayant approximativement le même rayon, et en ce que la membrane (6, 84) présente, au moins dans la région de son contact de roulement avec les surfaces d'appui (12, 10, 78, 98), à l'état non déformé, une courbure sphérique ayant approximativement le rayon des surfaces d'appui.

2 Dispositif à piston poussant selon la revendication 1, caractérisé en ce que la membrane (6, 54) est formée par emboutissage sphérique d'une matière initialement plane, formée de tissu imprégné de caoutchouc ou de matière synthétique.

3. Dispositif à piston poussant selon la revendication 1, caractérisé en ce que les plans tangents à la surface d'appui (12) du corps (4) font avec l'axe central du dispositif un angle de moins de 30°.

4. Dispositif à piston poussant selon la revendication 3, caractérisé en ce que le plus petit angle entre un plan tangent à la surface d'appui (12) du corps (4) et l'axe central du dispositif se situe dans la gamme de 0 à 20°.

5. Dispositif à piston poussant selon l'une des revendications 1 à 4, caractérisé en ce que le corps (70) du dispositif est formé d'un fond de corps (72) en forme de plateau présentant un rebord (74) coudé vers le haut et une partie circonférentielle de corps, de forme annulaire, présentant la surface d'appui de membrane (78) et munie d'un rebord (80) coudé vers le haut, en ce que la partie circonférentielle de corps (76) est insérée dans le fond de corps (72) à la façon d'un couvercle, les deux parties de corps (72, 76) enfermant entre elles la membrane, avec serrage, à sa région circonférentielle extérieure (82) et les rebords (80, 74) coaxiaux à l'axe central du dispositif étant reliés entre eux solidairement.

6. Dispositif à piston poussant selon la revendication 5, caractérisé en ce que les parties de corps (72, 76) et le piston (92) sont des pièces de tôle embouties.

7. Dispositif à piston poussant selon les revendications 5 et 6, caractérisé en ce que le fond de corps (72) et la partie circonférentielle de corps (76) présentent des parties de paroi respectives, qui sont parallèles entre elles et disposées dans un plan dirigé transversalement à l'axe central du dispositif, et enserrent entre elles la région circonférentielle extérieure (82) de la membrane (84), les rebords (80, 74) des deux parties de corps, coaxiaux à l'axe central du dispositif, se raccordans directement à ces parties de paroi d'enserrement.

8. Dispositif à piston poussant selon l'une des revendications 5 à 7, caractérisé en ce que les rebords (74, 80) des parties de corps (72, 76) sont reliés entre eux par soudage par points.

9. Dispositif à piston poussant selon l'une des revendications 5 à 8, caractérisé en ce que sur le fond de corps (72) ou la partie circonférentielle de corps (76) sont prévus des appendices (100) pour la fixation du dispositif en position d'utilisation.

10. Dispositif à piston poussant selon la revendication 9, caractérisé en ce que les appendices sont formés de courbures (100), dirigées radialement vers l'intérieur, d'un rebord (80) de la partie circonférentielle de corps (76) et présentent une surface d'engagement par dessous.

11. Dispositif à piston poussant selon la revendication 5, caractérisé en ce que la partie circonférentielle de corps (76) présente un bord (90) dirigé vers l'intérieur qui forme une butée pour le piston (92).

12. Dispositif à piston poussant selon l'une des revendications 1 à 5, caractérisé par une tige de guidage (112) destinée au piston (92) et fixée au fond de corps (72), un palier d'articulation (122) étant prévu entre la tige de guidage et un appendice cylindrique creux (120) du piston.

FIG. 1

FIG. 2

FIG. 3

FIG. 4

FIG. 5

FIG. 6

FIG. 7

FIG. 8